Europäisches Patentamt

European Patent Office

Office européen des brevets

(11) Numéro de publication: **0 347 310**
**A1**

## (12) DEMANDE DE BREVET EUROPEEN

(21) Numéro de dépôt: **89401650.0**

(22) Date de dépôt: **14.06.89**

(51) Int. Cl.⁴: **H 02 J 7/14**

(30) Priorité: **15.06.88 FR 8808019**

(43) Date de publication de la demande:
**20.12.89 Bulletin 89/51**

(84) Etats contractants désignés:
**AT BE CH DE ES FR GB GR IT LI LU NL SE**

(71) Demandeur: **MOURGEON INDUSTRIE ET ENGINEERING S.A.**
**15, Rue Gay Lussac Zone Industrielle**
**F-94430 Chennevieres Sur Marne (FR)**

(72) Inventeur: **Mourgeon, Jean-Claude**
**59, rue Colbert F-77330**
**Ozoir-la Ferrière (FR)**

(74) Mandataire: **Casalonga, Axel et al**
**BUREAU D.A. CASALONGA - JOSSE Morassistrasse 8**
**D-8000 München 5 (DE)**

(54) **Circuit de charge de batterie incluant une génératrice à régime très variable, notamment pour éolienne.**

(57) Circuit de charge d'une batterie (4) d'accumulateurs incluant une génératrice (1) à régime très variable, insérée dans un circuit primaire alternatif (2) comprenant également la diagonale alternative d'un pont redresseur primaire (P1) dont la diagonale continue est insérée dans un circuit primaire continu (3) comportant la batterie (4) caractérisé par le fait que la génératrice (1) est un alternateur à aimants permanents à une ou plusieurs phase(s), et que le circuit alternatif primaire de chaque phase comporte une impédance (T) de limitation du courant.

FIG.4

EP 0 347 310 A1

## Description

### Circuit de charge de batterie incluant une génératrice à régime très variable, notamment pour éolienne.

L'invention concerne la production d'énergie électrique à partir d'une source d'entraînement mécanique à vitesse très variable, en particulier une roue éolienne, ou encore une génératrice d'éclairage de wagon de chemin de fer, ou une turbine au fil de l'eau.

Les instants où l'énergie mécanique est disponible et la puissance disponible ne correspondant pas dans le temps avec les besoins, il est indispensable de stocker l'énergie ainsi produite, généralement dans une batterie d'accumulateurs.

Cependant, le régime très variable de la génératrice rend extrêmement difficile la régulation et la production d'un courant et d'une tension de charge convenables pour la batterie dans des conditions de rendement acceptables.

Par exemple, l'utilisation d'un alternateur classique limite énormément les possibilités de génération d'énergie électrique, notamment aux bas régimes, et par exemple dans le cas d'une éolienne, il n'est pratiquement plus possible de produire de l'énergie en-dessous d'un vent de 6 mètres/seconde.

L'utilisation d'une dynamo, ou mieux encore d'un alternateur de type automobile, est moins sensible aux variations de vitesse de rotation, puisque ces équipements sont conçus pour cela dès l'origine, mais le rendement énergétique est très moyen et nécessite une vitesse minimum pour amorcer le débit.

Une autre solution consiste à utiliser un alternateur à aimants permanents qui présente l'avantage de produire de l'énergie dès les très basses vitesses, de l'ordre de quelques tours/minute, et de pouvoir supporter des vitesses très élevées, ce qui est particulièrement favorable dans le cas des éoliennes et simplifie au maximum la mécanique, puisqu' il n'est pas nécessaire de réguler la vitesse de l'hélice.

Par contre, l'inconvénient majeur de ce type de générateur est que la tension de sortie est proportionnelle à la vitesse de rotation et qu'il n'existe aucun moyen de régulation de cette tension produite, puisqu'un tel alternateur ne comporte aucun courant d'excitation.

Par contre, l'intensité délivrée peut être constante à condition que la charge soit adaptée à la tension de sortie.

Si l'on désire seulement produire des calories pour le chauffage, cet inconvénient est mineur; par contre si l'on désire charger une batterie, on se heurte au problème de la tension variable qui rend incompatible les contraintes de charge et les caractéristiques de l'alternateur à aimants permanents.

Le but de l'invention est d'éliminer les inconvénients précédents, c'est-à-dire de réaliser un circuit de charge de batterie incluant une génératrice à régime très variable, qui permette de récupérer le maximum d'énergie dans des conditions de rendement optimales, tout en réduisant au minimum le degré de sophistication.

L'invention comporte naturellement, d'une manière connue, une génératrice constituée par un alternateur à une ou plusieurs phase(s), dont chaque phase est insérée dans un circuit primaire alternatif, dans lequel est inséré également la diagonale alternative d'un pont redresseur primaire dont la diagonale continue est à son tour insérée dans un circuit primaire continu raccordé aux bornes de la batterie.

Selon une caractéristique de l'invention, l'alternateur est un alternateur à aimants permanents, et le ou chaque circuit primaire alternatif comporte une impédance de régulation d'intensité.

Cette impédance peut être une simple résistance, mais préférablement une self, ou mieux encore l'enroulement primaire d'un transformateur dont l'enroulement secondaire est inséré dans un circuit secondaire alternatif qui comporte à son tour une résistance, ou mieux encore la diagonale alternative d'un pont redresseur secondaire dont la diagonale continue est insérée dans un circuit secondaire continu raccordé en parallèle avec le ou les autre(s) circuit(s) continu(s) primaire(s) ou secondaire(s).

D'autres particularités de l'invention apparaîtront dans la description qui va suivre de divers modes de réalisation pris comme exemples et représentés sur les schémas annexés, sur lesquels :

la figure 1 représente le cas monophasé avec résistance;

la figure 2 représente le cas monophasé avec self;

la figure 3 représente le cas monophasé avec transformateur et résitance;

la figure 4 représente le cas monophasé avec transformateur et redresseur secondaire; et

les figures 5 et 6 représentent respectivement les modes de réalisation correspondant à la figure 4, appliqués à des alternateurs biphasés et triphasés.

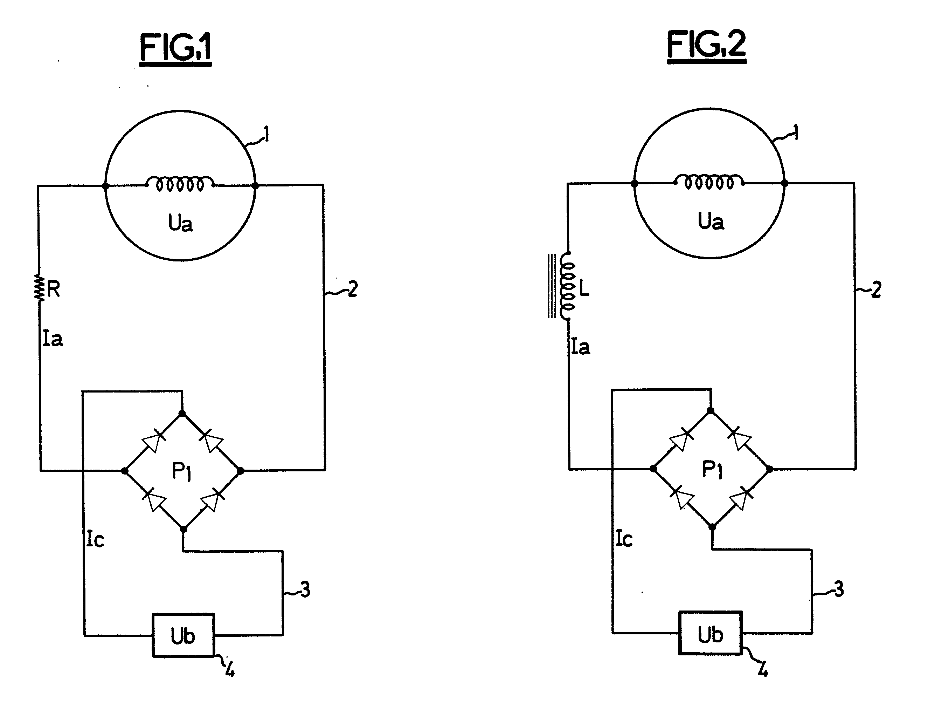

On voit sur la figure 1 l'alternateur 1, dont la tension aux bornes est Ua, qui est inséré dans le circuit primaire alternatif 2, parcouru par l'intensité Ia et comportant en série une résistance R et la diagonale alternative d'un pont redresseur primaire P1. La diagonale continue de ce pont P1 est à son tour insérée dans un circuit primaire continu 3 parcouru par une intensité Ic et raccordé à la batterie 4 dont la tension aux bornes est Ub.

La valeur de R est calculée pour obtenir l'intensité maximum de charge de batterie autorisée pour la tension Ua maximum obtenue par l'alternateur au régime maximum de celui-ci. Cette intensité peut être définie par la formule :

$$Ic = Ia = (Ua.\sqrt{2} - Ub)/R$$

Ce mode de réalisation présente l'avantage d'être auto-adaptatif à la tension de la batterie, mais l'inconvénient d'avoir un faible courant de charge à basse vitesse.

On peut améliorer le dispositif en remplaçant la résistance R par une self à fer L comme représenté sur la figure 2. En effet, l'alternateur ayant une vitesse variable, la fréquence du courant produit est directement liée à cette vitesse, et d'autre part, on sait que la tension Ua est également fonction de la vitesse de rotation, de sorte qu'en pratique pour un appareil donné, l'augmentation de la tension et de la fréquence suivent une progressionparallèle.

Dans la formule ci-dessus, R est à remplacer par L ω où ω est la pulsation du courant alternatif directement proportionnelle à la fréquence.

A faible vitesse, la fréquence est très basse, de l'ordre de quelques hertz, et la réactance de L est pratiquement nulle. Par conséquent, dès l'instant où Ua.$\sqrt{2}$ dépasse la valeur de la tension Ub de la batterie, on dispose d'un courant de charge maximum sur la batterie. Ensuite, au fur et à mesure que la vitesse de l'alternateur augmente, la tension Ua augmente, mais la réactance de L augmente aussi, faisant apparaître une tension aux bornes de la self L qui est en opposition avec Ua et va donc stabiliser le courant de charge Ic à la valeur choisie quelle que soit la valeur de Ua.

Cette disposition présente l'avantage d'assurer une charge maximum dès les basses vitesses, d'où la possibilité de charger la batterie avec des vents de l'ordre de 3 mètres/seconde dans le cas d'application à une éolienne. En contre-partie, le rendement est assez faible à haut régime.

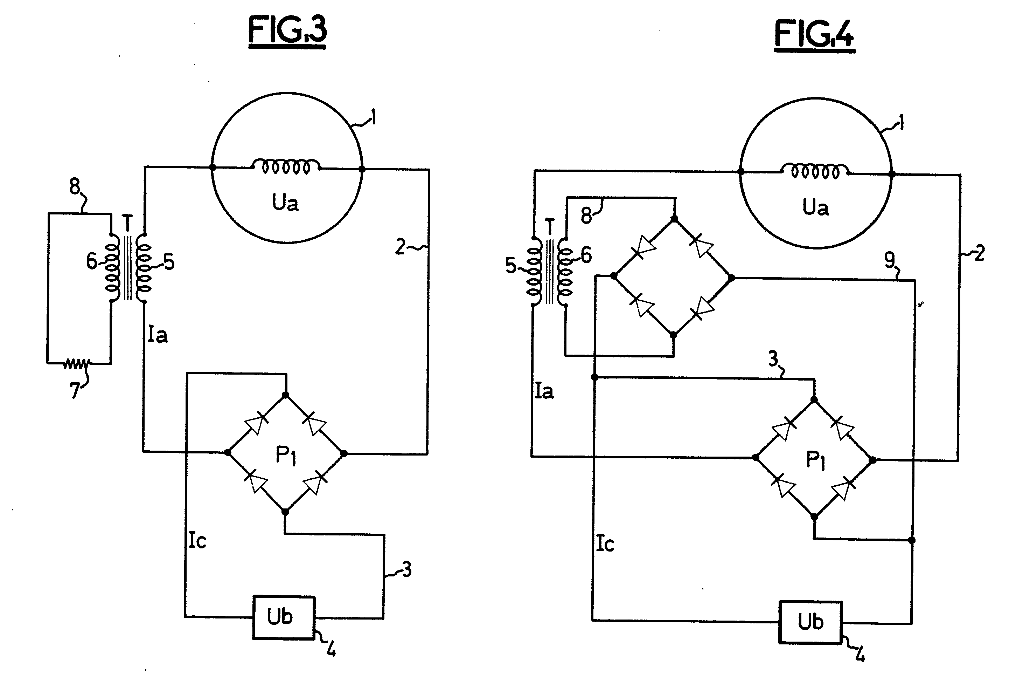

Pour y remédier, on peut perfectionner à nouveau le dispositif, de la manière représentée sur la figure 3, en remplaçant la self L par le primaire 5 d'un transformateur T dont le secondaire 6 alimente par exemple une résistance 7. Ce dispositif fonctionne de la même façon que dans le cas précédent, avec cette fois la récupération de l'énergie réactive du circuit qui se trouve dissipée dans la résistance 7 et récupérée sous forme de chaleur, servant par exemple au chauffage.

L'avantage est que l'on obtient un bon rendement global à tous les régimes, mais avec l'inconvénient que l'on récupère très peu de calories à basse vitesse.

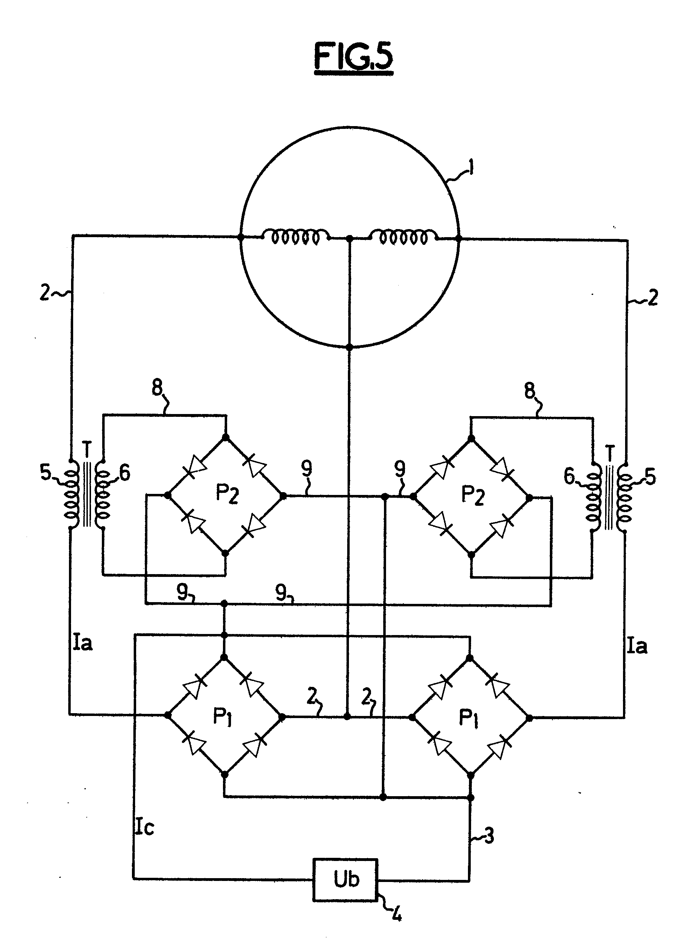

Un nouveau perfectionnement de l'ensemble consiste, comme illustré sur la figure 4, à remplacer cette résistance 7 par un circuit alternatif secondaire 8 dans lequel est inséré la diagonale alternative d'un pont redresseur secondaire P2, dont la diagonale continue est insérée dans un circuit secondaire continu 9, lui-même monté en parallèle avec le circuit primaire continu 3 qui inclut déjà le pont redresseur primaire P1 et la batterie 4.

A basse vitesse, dès que Ua.$\sqrt{2}$ devient supérieur à Ub, le courant continu Ic dans la batterie 4 et la partie du circuit continu commune au circuit primaire continu 3 et au circuit secondaire continu 9, est en fait égal à l'intensité alternative Ia.

Lorsque la vitesse augmente, une tension de réaction apparaît aux bornes du primaire 5 du transformateur T, qui induit une tension dans le secondaire 6 de ce transformateur, et un courant supplémentaire apparaît dans le pont P2 et la branche 9 du circuit secondaire continu. Ce courant s'additionne au précédent dans la partie commune Ic. On obtient donc un courant de charge supplémentaire lié directement à la vitesse de rotation.

L'avantage de ce dernier dispositif est qu'il récupère la quasi totalité de l'énergie produite quel que soit le régime de rotation, c'est-à-dire dans le cas d'une éolienne quel que soit le régime du vent. De plus, l'énergie ainsi récupérée est entièrement stockée sous forme électrique dans la batterie pour une utilisation différée.

On voit en outre que, malgré cet ultime perfectionnement, le dispositif demeure extrêmement simple et robuste, puisque les seuls composants utilisés, transformateur et ponts redresseurs, sont eux-mêmes des composants simples et robustes.

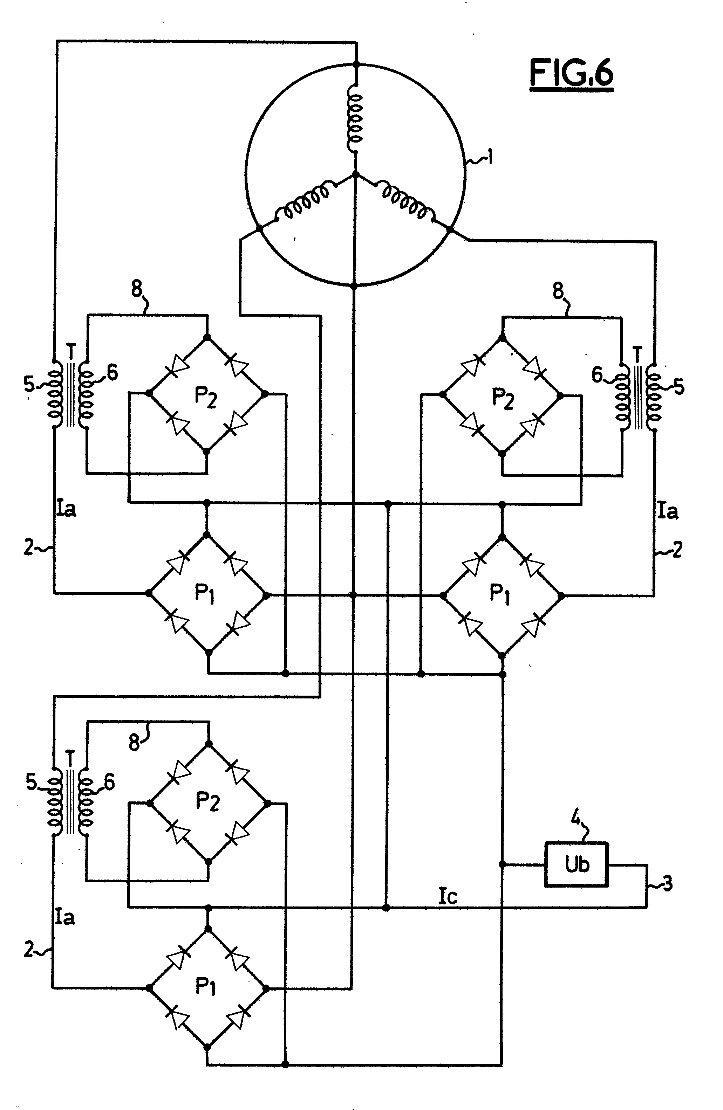

Naturellement, si l'alternateur à aimants permanents 1 est biphasé, comme représenté sur la figure 5, il suffit de multiplier par le nombre de phases l'ensemble des composants de la figure 4, représentés avec les mêmes références.

Les deux circuits alternatifs primaires 2 sont montés en parallèle, avec éventuellement une branche centrale commune, tandis que tous les circuits alternatifs secondaires 8 sont indépendants, puisque déphasés, et comportent chacun leurs ponts redresseurs secondaires P2, et toutes les diagonales continues des divers ponts redresseurs primaires et secondaires sont raccordées en parallèle sur la même branche commune 3 du circuit continu primaire aboutissant à la batterie 4.

La même remarque s'applique au mode de réalisation de la figure 6 avec un alternateur 1 triphasé, les divers éléments étant multipliés par 3.

## Revendications

1. Circuit de charge d'une batterie (4) d'accumulateurs incluant un alternateur (1) à aimants permanents à une ou plusieurs phase(s) à régime alternatif (2) comprenant également la diagonale alternative d'un pont redresseur primaire (P1) dont la diagonale continue est insérée dans un circuit primaire continu (3) comportant la batterie (4), ledit circuit primaire alternatif de chaque phase comportant une impédance de limitation du courant,
caractérisé par le fait que ladite impédance est constituée par le primaire (5) d'un transformateur (T) dont le secondaire (6) est refermé sur un circuit alternatif secondaire (8) incluant un élément récupérateur (7,P2).

2. Circuit selon la revendication 1, caractérisé par le fait que ledit élément récupérateur du circuit alternatif secondaire (8) est constitué par une résistance de chauffage (7).

3. Circuit selon la revendication 1, caractérisé par le fait que ledit élément récupérateur du circuit alternatif secondaire (8) est constitué par la diagonale alternative d'un pont redresseur secondaire (P2) dont la diagonale continue est insérée dans un circuit continu secondaire (9), lui-même monté en parallèle avec le circuit continu primaire (3) alimentant la batterie.

4. Circuit selon la revendication 3, caractérisé par le fait que l'alternateur (1) est biphasé ou triphasé, et que tous les pont redresseurs primaires (P1) et les pont redresseurs secondaires (P2) ont leurs diagonales continues raccordées en parallèle sur le circuit de charge de la batterie (4).

/

**FIG.1**

**FIG.2**

**FIG.3**

**FIG.4**

# FIG.5

FIG.6

## RAPPORT DE RECHERCHE EUROPEENNE

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1294213 (NORMACEM SA) <br> * page 2, ligne 2 - page 3, ligne 2; figures 1-4 * | 1, 3, 4 | H02J7/14 |
| A | | 2 | |
| Y | US-A-3757198 (F.HILL) <br> * colonne 1., ligne 30 - colonne 2, ligne 29; figures 1, 2 * | 1, 3, 4 | |
| Y | FR-A-1438054 (DUCATI ELETTRONICA SPA) <br> * page 2, ligne 13 - page 3, ligne 39; figures 1-8 * | 1, 3, 4 | |
| A | | 2 | |
| Y | FR-A-1223396 (SOCIETE DE L ACCUMULATEUR FULMEN) <br> * le document en entier * | 1, 3, 4 | |
| A | ELECTRONIC DESIGN <br> vol. 25, no. 14, 05 juillet 1977, <br> page 92 LOONEY C. H.: <br> "SCHOTTKY DIODES RECTIFY EFFICIENTLY IN A BICYCLE-LIGHTING SYSTEM" <br> * page 92 * | 1, 2 | |
| A | FR-A-2019258 (J.LUCAS INDUSTRIES LTD) <br> * page 1, ligne 18 - page 2, ligne 6; figure 1 * | 1, 3 | |

**DOMAINES TECHNIQUES RECHERCHES (Int. Cl.4)**

H02J

Le présent rapport a été établi pour toutes les revendications

| Lieu de la recherche | Date d'achèvement de la recherche | Examinateur |
|---|---|---|
| LA HAYE | 07 SEPTEMBRE 1989 | FOURRICHON P.M.L. |